**Europäisches Patentamt**

**European Patent Office**

**Office européen des brevets**

(11) Veröffentlichungsnummer: **0 306 664**
**A2**

(12) **EUROPÄISCHE PATENTANMELDUNG**

(21) Anmeldenummer: **88111280.9**

(22) Anmeldetag: **14.07.88**

(51) Int. Cl.⁴: **H04Q 1/457**

(30) Priorität: **09.09.87 DE 3730233**

(43) Veröffentlichungstag der Anmeldung:
**15.03.89 Patentblatt 89/11**

(84) Benannte Vertragsstaaten:
**AT BE CH FR GB IT LI LU NL**

(71) Anmelder: **TELENORMA Telefonbau und Normalzeit GmbH**
**Mainzer Landstrasse 128-146**
**D-6000 Frankfurt am Main(DE)**

(72) Erfinder: **Eli, Bernhard, Dipl.-Ing.**
**Lenbachstrasse 96**
**D-6090 Rüsselsheim(DE)**
Erfinder: **Mangold, Ernst, Dipl.-Ing.**
**Obere Rützelstrasse 19**
**D-6230 Frankfurt/Main 80(DE)**

(54) **Hörton- und Sprachansagegenerator für digitale Fernmelde-, insbesondere Fernsprechvermittlungsanlagen.**

(57) Bei dem erfindungsgemäßen Hörton- und Sprachansagegenerator sind mehrere unabhängig voneinander arbeitende Zähleinrichtungen vorgesehen, die ihrer jeweiligen Schaltstellung entsprechend laufend Adressen erzeugen. Diese Adressen werden über einen Multiplexer den Adressiereingängen eines programmierbaren Festwertspeichers angeboten. Dabei wird innerhalb einer jeden Zeitlage während einer ersten Phase zunächst eine Speicherzeile angesteuert, die Auskunft darüber gibt, welche Art von Hörton- oder Sprachansage zu dieser Zeitlage ausgesendet werden soll. Während einer zweiten Phase innerhalb der gleichen Zeitlage wird mit Hilfe der in der ersten Phase ausgelesenen Information und entsprechend der Stellung einer Abtastzähleinrichtung eine Speicherzeile angesteuert, woraus das zu diesem Zeitpunkt abzugebende PCM-Wort ausgelesen wird.

Fig. 1

## Hörton- und Sprachansagegenerator für digitale Fernmelde-, insbesondere Fernsprechvermittlungsanlagen

Die Erfindung betrifft einen Hörton- und Sprachansagegenerator für digitale Fernmelde-, insbesondere Fernsprechvermittlungsanlagen nach dem Oberbegriff des Patentanspruches 1.

Aus der DE-OS 34 23 818 ist ein digitaler Generator für in ein PCM-Zeitmultiplex-Fernmelde-, insbesondere Fernsprechsystem einzuspeisende akustische Signale bekannt. Dort sind neben den die PCM-Worte enthaltenden Ton- bzw. Sprachspeichern weitere Zähl- und Speichereinrichtungen vorgesehen, wobei jedem Zähler ein Speicher oder Puffer fest zugeordnet ist. Die Verknüpfung der einzelnen Speicher- oder Zählerausgänge zu Adressen für die Ansteuerung des Tonspeichers oder des Sprachspeichers ist relativ kompliziert. Außerdem ist ein besonderer Adreßzähler mit einem nachgeschalteten Adreßpuffer erforderlich, um die Einzeladressierung des Tonspeichers oder des Sprachspeichers auf das nächste PCM-Wort weiterzuschalten. Durch die Verschiedenartigkeit von Zählern, Speichern und Logikanordnungen ist es nicht möglich, diesen digitalen Generator platzsparend auszuführen.

Die Aufgabe der Erfindung besteht darin, einen Hörton-und Sprachansagegenerator für digitale Fernmelde-, insbesondere Fernsprechvermittlungsanlagen vorzustellen, wobei die Speicheranordnung und die Art der Adressierung einheitlich sind, so daß eine übersichtliche einfache Verdrahtung und Verknüpfung möglich ist, und nur wenige einzelne Bauelemente erforderlich sind.

Diese Aufgabe wird mit einer Merkmalskombination gelöst, wie sie im Patentanspruch 1 angegeben ist.

Damit wird in vorteilhafter Weise erreicht, daß alle Zähl- und Logikanordnungen, die außer mindestens einem programmierbaren Festwertspeicher erforderlich sind, in einheitlicher Struktur so realisiert werden können, daß sie in nur einem einzigen hoch integrierten Schaltkreis zusammengefaßt werden können. Das Zusammenstellen von Hörtönen und deren Rhythmen erfolgt dabei ausschließlich durch entsprechende Programmierung eines einzigen dafür vorgesehenen programmierbaren Festwertspeichers. Dabei ist eine sehr große Variationsbreite in der Kombination von Tonfrequenzen und Rhythmen möglich. Die für Sprachansagen benötigten PCM-Worte lassen sich entweder bei noch vorhandener Kapazität im Tonspeicher unterbringen,oder es wird dafür ein separater Speicherbaustein benutzt. Weiterbildungen der Erfindung ergeben sich aus den Unteransprüchen.

Ein Ausführungsbeispiel der Erfindung wird nachfolgend anhand von Zeichnungen näher erläutert.

Es zeigt:

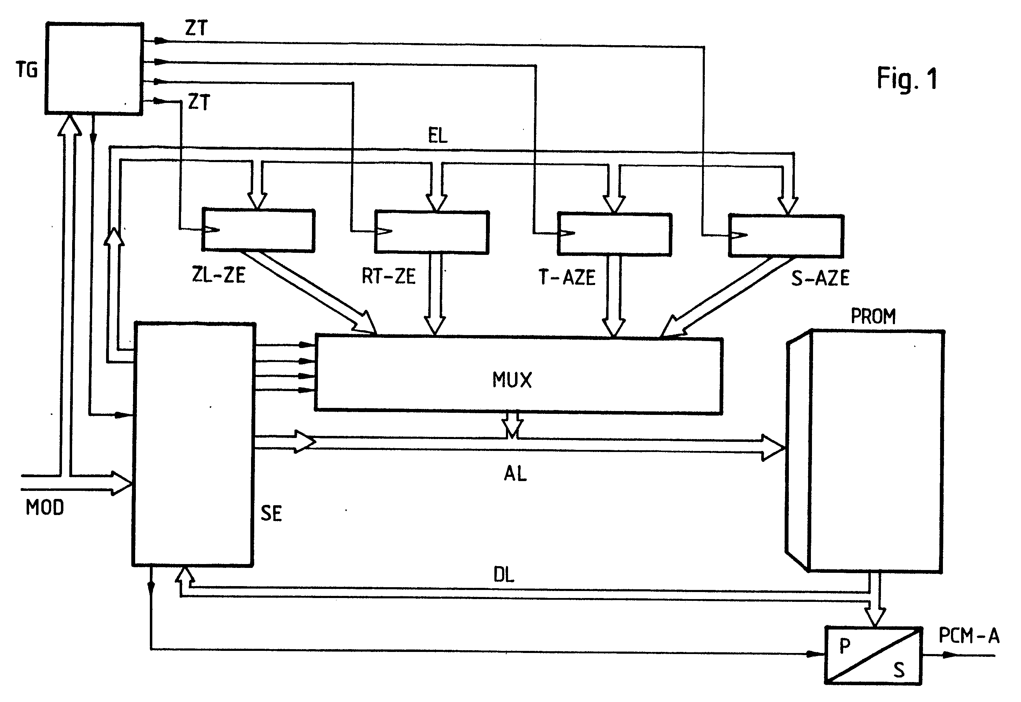

Fig. 1 das Blockschaltbild des gesamten Hörton- und Sprachansagegenerators.

Fig. 2 eine Übersicht der Speicherbereiche im programmierbaren Festwertspeicher.

Fig. 3 eine ausschnittsweise Darstellung der Zeileninhalte im Zeitlagenbereich.

Fig. 4 die Einzeldarstellung einer Zähleinrichtung. In der Fig. 1 ist ein Taktgeber TG dargestellt, der eine Steuereinrichtung SE mit Takten versorgt und die einzelnen Zähleinrichtungen ZL-ZE, RT-ZE, T-AZE und S-AZE mit einzelnen Zeittakten ZT steuert. Die Ausgänge dieser Zähleinrichtungen sind mit den Eingängen des Multiplexers MUX verbunden. Die Ausgänge dieses Multiplexers MUX führen als Adreßleitungen AL zu den Adressiereingängen des programmierbaren Festwertspeichers PROM.

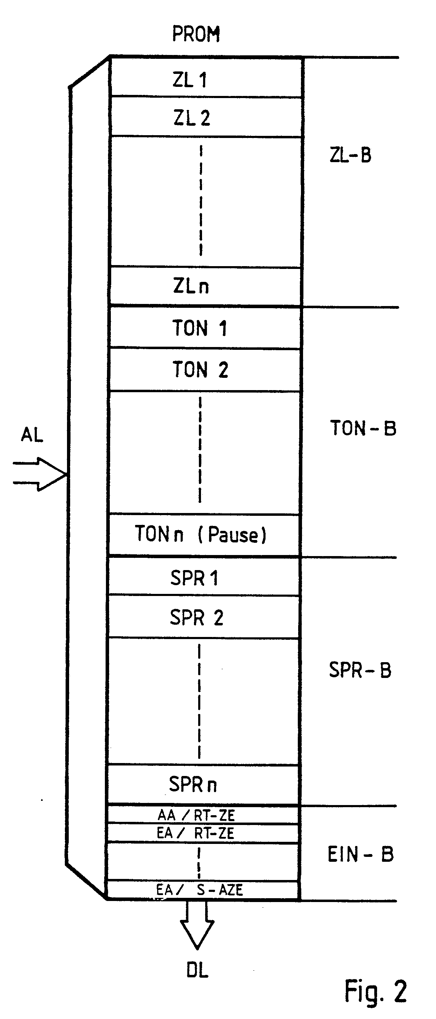

Die Zeitlagen-Zähleinrichtung ZL-ZE wird mit einem den Zeitlagenabständen entsprechenden Zähltakt ZT weiter gezählt so daß im programmierbaren Festwertspeicher PROM ein der jeweiligen Zeitlage zugeordneter Speicherbereich adressiert werden kann. Unabhängig davon wird mit einem langsameren Zeittakt ZT die Rhythmus-Zähleinrichtung RT-ZE fortlaufend weitergeschaltet. Innerhalb dem für eine Zeitlage zur Verfügung stehenden Zeitraum geschieht nun nacheinander folgendes: Während einer ersten Phase wird der Multiplexer MUX von der Steuereinrichtung SE so eingestellt, daß die Ausgänge sowohl der Zeitlagen-Zähleinrichtung ZL-ZE als auch die Ausgänge der Rhythmus-Zähleinrichtung RT-ZE auf die Adreßleitungen AL durchgeschaltet werden. Daraufhin wird im programmierbaren Festwertspeicher PROM eine ganz bestimmte Speicherzeile in demjenigen Abschnitt des Zeitlagenbereiches ZL-B angesteuert, die der Stellung der Zeitlagen-Zähleinrichtung ZL-ZE entspricht. Es sei angenommen, daß die besagte Speicherzeile sich z.B. im Bereich der Zeitlage 1, ZL1 in Fig. 2, befindet.

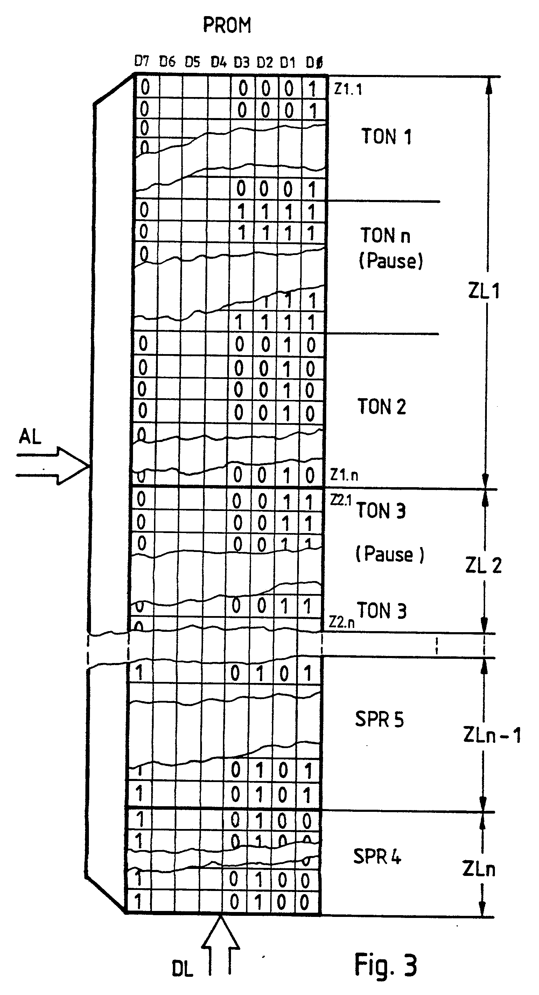

Wie der Inhalt einer solchen Speicherzeile aussehen kann, ist in Fig. 3 dargestellt. Die Einzeladressierung der Zeilen erfolgt dabei entsprechend der Einstellung der Rhythmus-Zähleinrichtung RT-ZE. Bei dem im Beispiel mit einer Zeile Z1.1 beginnenden Abschnitt innerhalb des für die Zeitlage ZL1 zugeordneten Bereiches handelt es sich um eine Anzahl von Speicherzeilen, die in diesem Beispiel durch ihren gleichartigen Inhalt das Aussenden einer bestimmten Tonfrequenz TON1 für eine vorbestimmte Zeitdauer beschreiben. Dabei wird mit dem in einer Spalte D7 eingetragenen Bit (im Beispiel 0) ausgesagt, daß es sich überhaupt um · eine Tonaussendung und nicht um eine Sprachansage handelt. Im Falle der Sprachansage wäre eine 1 in der betreffenden Spalte eingetragen, wie dies weiter unten in der Fig. 3 dargestellt ist.

Im Beispiel sind weitere vier Spalten (D0 bis D3) vorgesehen, womit binär codiert die Art des Tones bzw. die Art der Sprachansage festgelegt werden kann. Wenn also vier Bit für die Einzelauswahl des zu sendenden Tones also einer vorbestimmten Frequenz oder einer Sprachansage zur Verfügung stehen, so können bis zu 16 verschiedene Töne und daneben weitere 16 verschiedene Sprachansagen vorhanden sein.

Weil es bei den meisten Hörtönen erforderlich ist, daß vorbestimmte Pausen vorhanden sind, und auch weil es zweckmäßig sein kann, zwischen die einzelnen Sprachansagen Pausen einzufügen, ist eine Bitkombination innerhalb des Tonbereiches TON-B in Fig. 2 für die Darstellung einer Pause vorgesehen. Wie aus Fig. 3 zu ersehen ist, ist dieser Bereich TONn durch die Bitkombination hexadezimal 15 gekennzeichnet.

Bei dem in Fig. 3 dargestellten Beispiel sei angenommen, daß innerhalb der Zeitlage 1 ein Hörton programmiert ist, der aus jeweils zwei Frequenzen TON1 und TON2 besteht und dazwischen Pausen aufweist. Bei jedem einzelnen Schritt der Rhythmus-Zähleinrichtung RT-ZE wird im gesamten, der Zeitlage ZL1 zugeordneten Bereich jeweils die nächste Speicherzeile im programmierbaren Festwertspeicher PROM angesteuert.

Entsprechendes gilt für die übrigen Zeitlagen, so wie es in Fig. 3 dargestellt ist. Demnach wäre in dem mit einer Zeile Z2.1 beginnenden Bereich der Zeitlage 2 ZL2 ein Hörton einprogrammiert, der nur eine Frequenz hat und vorbestimmte Pausen aufweist. Weiter unten in Fig. 3 ist dargestellt, daß in einer anderen Zeitlage, z.B. ZLn-1 eine Sprachansage, im Beispiel SPR5 stattfinden soll. In einer weiteren Zeitlage ZLn soll dem Beispiel entsprechend eine andere Sprachansage SPR4 erfolgen. Für Sprachansagen ist zur Unterscheidung gegenüber Hörtönen, wie bereits erwähnt, das in der Spalte D7 vorhandene Bit mit einer 1 beschrieben.

Wenn also auf die zuvor beschriebene Weise innerhalb der ersten Phase einer jeden Zeitlage eine ganz bestimmte Zeile innerhalb des dieser Zeitlage, z.B. ZL1, zugeordneten Bereiches angesteuert worden ist, so wird der Inhalt dieser Zeile entsprechend der Darstellung in Fig. 3 ausgelesen und der Steuereinrichtung SE zugeführt. Der Inhalt der in der ersten Phase aus dem programmierbaren Festwertspeicher ausgelesenen Zeile wird vorübergehend in der Steuereinrichtung zwischengespeichert. Nun wird in einer zweiten Phase je nachdem, ob es sich um eine Hörtoneinblendung oder ob es sich um eine Sprachansage handelt, der Multiplexer MUX entsprechend eingestellt. Es gelangen also entweder die Ausgänge der Ton-Abtastzähleinrichtung T-AZE oder die Ausgänge der Sprachabtast-Zähleinrichtung S-AZE über den Multiplexer auf die Adreßleitungen AL. Dazu kommen noch die in der Phase 1 ausgelesenen Bits derjenigen Spalten, im Beispiel D0 bis D3, die einen ganz bestimmten Tonspeicherbereich, z.B. TON1 oder einen ganz bestimmten Sprachspeicherbereich, z.B. SPR4, kennzeichnen. Es erfolgt daraufhin während der zweiten Phase innerhalb einer jeden Zeitlage die Adressierung einer ganz bestimmten Zeile innerhalb des Tonspeicherbreiches TON-B oder innerhalb des Sprachspeicherbereiches SPR-B. Dabei erfolgt die Bereichsadressierung mit den in der ersten Phase ausgelesenen Bits und die Einzeladressierung geschieht entsprechend der Stellung entweder der Tonabtastzähleinrichtung T-AZE oder der Sprachabtastzähleinrichtung S-AZE. An den Ausgang des programmierbaren Festwertspeichers sind Datenleitungen DL angeschlossen, welche das in der ersten Phase ausgelesene Wort, wie es in Fig. 3 dargestellt ist, der Steuereinrichtung SE zuführen. An diese Datenleitungen ist ein Parallel-Seriell-Wandler P/S angeschlossen, wohin das in der zweiten Phase aus jeweils einer Zeile im Tonspeicherbereich TON-B oder im Sprachspeicherbereich SPR-B stammende PCM-Wort gelangt. Hier wird es in bekannter Weise parallel-seriell umgesetzt und gelangt an den Ausgang PCM-A des Hörton- und Sprachansagegenerators.

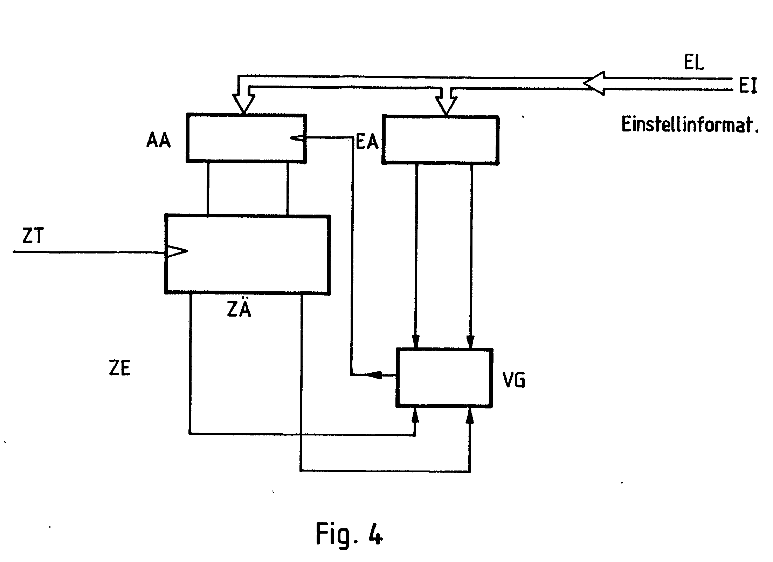

Um den Hörton- und Sprachansagegenerator für alle Anwendungsfälle optimal anpassen zu können, ist innerhalb des programmierbaren Festwertspeichers PROM ein besonderer Speicherbereich EIN-B für Einstellinformationen vorgesehen. Dort sind einer jeden Zähleinrichtung zugeordnet besondere Speicherzeilen vorgesehen. Dieser Speicherbereich EIN-B wird jeweils bei Inbetriebnahme des Hörton- und Sprachansagegenerators durch eine besondere Adressierung angesteuert. Dies geschieht dadurch, daß auf besonderen dafür vorgesehenen Anschlüssen MOD ein vorbestimmter Code angelegt wird. Dadurch gelangen die Inhalte dieser Zeilen aus diesem besonderen Speicherbereich EIN-B nacheinander über die Datenleitungen DL zur Steuereinrichtung SE. Von dort aus werden sie ebenfalls nacheinander parallel den einzelnen Zähleinrichtungen ZE angeboten. In Fig. 4 ist dargestellt, wie diese Informationen bei den einzelnen Zähleinrichtungen ZE aufgenommen werden können. Bei den Zähleinrichtungen ZE sind Pufferspeicher AA, EA vorgesehen, für die Aufnahme jeweils einer Anfangsadresse und/oder einer Endadresse. Wenn sowohl eine Anfangsadresse als auch eine Endadresse in die betreffenden Pufferspeicher AA und EA eingegeben worden sind, so erreicht der vom Zähltakt ZT gesteuerte Zähler ZÄ irgendwann eine Zählerstellung, die dem Inhalt des Puffers für die Endadresse EA entspricht. Dies wird durch einen Vergleicher VG festgestellt, der dann einen Impuls an den Pufferspeicher für die Anfangsadresse AA abgibt. Dabei wird der Inhalt des Pufferspeichers für die Anfangsadresse AA parallel in den Zähler ZÄ geladen.

Es ist auch denkbar, daß am Zähler eine Decodierung angeschlossen ist, so daß beim Erreichen einer fest vorgegebenen Endstellung der Zähler ZÄ wieder auf einen Anfangswert gestellt wird. Es erübrigt sich dann, auch eine Endadresse EA zu übertragen. Mit derartigen Maßnahmen soll erreicht werden, daß von der gesamten Zählkapazität nur ein vorbestimmter Teil ausgewählt wird, damit die Anzahl der Schritte genau definiert ist und damit in Verbindung mit der Frequenz des Zähltaktes ZT die Zykluszeit bestimmt werden kann.

Mit einer derartigen Ausgestaltung der Zähleinrichtung ZE ist es möglich, bei der Zeitlagenzähleinrichtung ZL-ZE die Anzahl der Zeitlagen ZL vorzugeben, die für das Einspeisen von Hörtönen und Sprachansagen vergeben werden sollen. Bei der Rhythmuszähleinrichtung RT-ZE richtet sich die Zykluszeit nach dem gemeinsamen Vielfachen aller Hörtöne und/oder Sprachansagen. Die Anzahl der Schritte richtet sich danach, wie genau Hörtonzeiten und Pausenzeiten definiert werden sollen. Dabei läßt sich auch,wie dies bereits beschrieben worden ist, eine höhere Genauigkeit dadurch erreichen, daß der Zähltakt in einer höheren Frequenz, z.B. im 10-ms-Abstand anstatt in 20-ms-Abstand angeboten wird. Bei einem schnelleren Zähltakt muß selbstverständlich auch die Anzahl der Schritte erhöht werden, wenn längere Intervallzeiten zu realisieren sind.

Bei der Tonabtastzähleinrichtung T-AZE und bei der Sprachabtastzähleinrichtung S-AZE ist ein Zähltakt mit einem Abstand von 125 µs erforderlich, weil die Abtastrate bekanntlich 8 kHz beträgt. Die Periodendauer und damit die Anzahl der Zählschritte richtet sich bei der Tonabtastzähleinrichtung T-AZE nach dem gemeinsamen Vielfachen der Periodendauer aller vorkommenden Hörtonfrequenzen. Und nach der Genauigkeit, die diese Frequenzen haben sollen. Bei der Sprachabtastzähleinrichtung S-AZE sind entsprechend dem Abtasttheorem pro Sekunde Sprachansage 8000 Schritte erforderlich, weil das gesamte Sprachband von 300 bis 3400 Hz,wie es für den Fernsprechkanal genormt ist, zur Verfügung stehen muß. Da aus diesem Grund für die Sprachansage im Verhältnis sehr viel mehr Speicherraum zur Verfügung stehen muß, ist es zweckmäßig, für Sprachansagen separate Speicherbausteine vorzusehen.

Mit der Anordnung der Zähleinrichtungen ZE und der Einteilung im programmierbaren Festwertspeicher PROM ist es möglich, alle in einem Fernsprechsystem vorkommenden Hörtöne und deren Rhythmen zu realisieren. Daneben sind verschiedene Sprachansagen möglich, die auch mit Hörtönen kombiniert werden können, wie dies beispielsweise beim bekannten Hinweiston der Fall ist, der aus 3 Frequenzen und einer Sprachansage besteht. Darüber hinaus sind außerdem alle denkbaren Sonderwünsche erfüllbar.

## Ansprüche

1. Hörton- und Sprachansagegenerator für digitale Fernmelde-, insbesondere Fernsprechvermittlungsanlagen, wobei die Abtastwerte für Hörtöne und Sprachproben als digitale Information nach dem PCM-Prinzip codiert in Speichern abgelegt sind und innerhalb der jeweils vorgesehenen Zeitlage ausgelesen werden, damit dem jeweiligen Verbindungszustand entsprechend Hörtöne und/oder Sprachansagen zu den Anschlußorganen gelangen können,
dadurch gekennzeichnet,
daß mehrere unabhängig voneinander arbeitende Zähleinrichtungen (ZL-ZE,RT-ZE,T-AZE, S-AZE) vorgesehen sind, die ihrer jeweiligen Schaltstellung entsprechend laufend Adressen erzeugen, welche an ihren Ausgängen erscheinen und über einen Multiplexer (MUX) auf ein zu den Adressiereingängen eines programmierbaren Festwertspeichers (PROM) führendes Adreßleitungsbündel (AL) geschaltet werden, wobei durch eine dafür vorgesehene Steuereinrichtung (SE) während einer ersten Phase innerhalb einer Zeitlage die von einer Zeitlagen-Zähleinrichtung (ZL-ZE) und die von einer Rhythmus-Zähleinrichtung (RT-ZE) gebildeten Adressen zusammen durchgeschaltet werden, um innerhalb des Zeitlagenbereichs (ZL-B) eines programmierbaren Festwertspeichers (PROM) eine ganz bestimmte, der jeweiligen Zeitlage zugeordnete Zeile (z.B. Z1.1) anzusteuern, worin die Adresse eines für einen bestimmten Hörton oder eine Sprachansage vorgesehenen Speicherbereiches (TON1 bis TONn, SPR1 bis SPRn) abgelegt ist,
und daß während einer zweiten Phase innerhalb der gleichen Zeitlage (z.B. ZL1) die Ausgänge einer Ton-Abtast-Zähleinrichtung (T-AZE) oder einer Sprachabtastzähleinrichtung (S-AZE) auf die Adreßleitungen (AL) geschaltet werden, womit die Einzeladressierung einer in dem zuvor erwähnten Tonoder Sprachspeicherbereich (TON-B, SPR-B) befindlichen Speicherzeile erfolgt, woraus das zu diesem Zeitpunkt abzugebende PCM-Wort ausgelesen wird.

2. Hörton- und Sprachansagegenerator nach Anspruch 1,
dadurch gekennzeichnet,
daß die einzelnen den Hörtönen zugeordneten, die PCM-Abtastwerte enthaltenden Speicherbereiche (TON1 bis TONn) unabhängig von der Frequenz des Hörtons die gleiche Anzahl von Speicherzeilen aufweisen, und somit die gleiche, von der Ton-Abtast-Zähleinrichtung (T-AZE) vorgegebene Zykluszeit besteht.

3. Hörton- und Sprachansagegenerator nach Anspruch 1,
dadurch gekennzeichnet,
daß die einzelnen den Sprachansagen zugeordneten, die PCM-Abtastwerte enthaltenden Speicherbereiche (SPR1 bis SPRn) die gleiche Anzahl von Speicherzeilen aufweisen und somit jeweils gleich lange Ansagezeiten bewirken.

4. Hörton- und Sprachansagegenerator nach Anspruch 1,
dadurch gekennzeichnet,
daß durch entsprechende Codierung innerhalb des einer Zeitlage (ZL1 bis ZLn) zugeordneten Speicherbereiches mehrere verschiedenartige Hörtöne und/oder Sprachansagen möglich sind.

5. Hörton- und Sprachansagegenerator nach Anspruch 1,
dadurch gekennzeichnet,
daß innerhalb des für Hörtöne vorgesehenen Speicherbereiches (TON-B) ein besonderer Speicherabschnitt (TONn) vorgesehen ist, der in Ton- oder Sprachpausen angesteuert wird.

6. Hörton- und Sprachansagegenerator nach Anspruch 1,
dadurch gekennzeichnet,
daß Anschlüsse (MOD) vorgesehen sind, womit die Frequenz des Zähltaktes (ZT) für die Rhythmus-Zähleinrichtung (RT-ZE) modifiziert werden kann.

7. Hörton- und Sprachansagegenerator nach Anspruch 6,
dadurch gekennzeichnet,
daß mit diesen Anschlüssen (MOD) auch die Bitrate des PCM-Ausgangs (PCM-A) umschaltbar ist.

8. Hörton- und Sprachansagegenerator nach Anspruch 1,
dadurch gekennzeichnet,
daß im programmierbaren Festwertspeicher ein besonderer Einstellbreich (EIN-B) vorgesehen ist, worin in einzelnen Speicherzeilen Einstellinformationen (z.B. AA/RT-ZE) gespeichert sind, die über Einstelleitungen (EL) den Zähleinrichtungen (ZL-ZE, RT-ZE, T-AZE, S-AZE) zugeführt werden und dort als Anfangsadresse (AA) und/oder Endadresse (EA) gespeichert werden, um damit die Zykluszeiten zu bestimmten.

9. Hörton- und Sprachansagegenerator nach Anspruch 1,
dadurch gekennzeichnet,
daß den Zähleinrichtungen (ZL-ZE, RT-ZE, T-AZE, S-AZE) Speichermittel für das Aufnehmen einer Anfangsadresse ( AA) und/oder einer Endadresse (EA) zugeordnet sind, und daß eine Vergleichseinrichtung (VG) beim Erreichen einer Endadresse (EA) ein Signal abgibt, womit die Anfangsadresse (AA) direkt eingestellt wird.

10. Hörton- und Sprachansagegenerator nach Anspruch 1,
dadurch gekennzeichnet,
daß der programmierbare Festwertspeicher (PROM) bereichsweise (z.B. TON-B, SPR-B) in separaten Gehäusen untergebracht ist.

11. Hörton- und Sprachansagegenerator nach Anspruch 1,
dadurch gekennzeichnet,
daß alle Zähleinrichtungen (ZL-ZE, RT-ZE, T-AZE, S-AZE), der Taktgeber (TG) sowie die aus Logikanordnungen bestehende Steuereinrichtung (SE) in einem hoch integrierten Schaltkreis zusammengefaßt sind.

Fig. 1

TELENORMA,TN   P 4111

PROM

| | |
|---|---|
| ZL 1 | |
| ZL 2 | |
| ⋮ | ZL-B |
| ZL n | |
| TON 1 | |
| TON 2 | |
| ⋮ | TON-B |
| TON n (Pause) | |
| SPR 1 | |
| SPR 2 | |
| ⋮ | SPR-B |
| SPR n | |
| AA / RT-ZE | |
| EA / RT-ZE | EIN-B |
| | |
| EA / S-AZE | |

AL →

DL ↓

Fig. 2

PROM

Fig. 3

TELENORMA, TN

P 4111

EP 0 306 664 A2

Fig. 4